Europäisches Patentamt

European Patent Office

Office européen des brevets

(19)

(11) Veröffentlichungsnummer: **0 229 977 B1**

# EUROPÄISCHE PATENTSCHRIFT

(12)

(45) Veröffentlichungstag der Patentschrift: **30.10.91**

(51) Int. Cl.⁵: **G10K 11/16, B60R 13/08**

(21) Anmeldenummer: **86117180.9**

(22) Anmeldetag: **10.12.86**

(54) **Geräuschdämmende Verkleidung für den Motorraum von Kraftfahrzeugen.**

(30) Priorität: **17.01.86 DE 3601204**

(43) Veröffentlichungstag der Anmeldung:
**29.07.87 Patentblatt 87/31**

(45) Bekanntmachung des Hinweises auf die
Patenterteilung:
**30.10.91 Patentblatt 91/44**

(84) Benannte Vertragsstaaten:
**DE FR IT SE**

(56) Entgegenhaltungen:
**DE-A- 2 006 741**
**DE-A- 2 818 252**
**DE-A- 2 909 802**
**US-A- 2 028 950**
**US-A- 2 959 495**

(73) Patentinhaber: **Daimler-Benz Aktiengesellschaft**
**Postfach 600202 Mercedesstrasse 136**
**W-7000 Stuttgart 60(DE)**

(72) Erfinder: **Stober, Helmut**
**Landhausstrasse 8**
**W-7031 Grafenau 1(DE)**

Rank Xerox (UK) Business Services

**Beschreibung**

Die Erfindung betrifft eine geräuschdämmende Verkleidung für den Motorraum von Kraftfahrzeugen, die aus einem Formkörper aus mehreren Lagen aus ggf. bindemittelhaltigen Fasermaterialien besteht, die unter Druck und Wärme unter Ausbildung von Zonen unterschiedlich vorgebbarer Verdichtungen zu dem Formkörper verformt worden sind.

Verkleidungen der vorgenannten Art sind z.B. aus DE-OS 32 47 343 oder DE-OS 33 24 705 bekannt. Bei der Herstellung solcher Verkleidungen wird von Textilfasern, z.B. Reißwolle ausgegangen. Mehrere Lagen von Reißwolle werden unter Beimischung eines unter erhöhter Temperatur wirksam werdenden Bindemittels zu einer Endlosmatte zusammengefaßt. Aus dieser Matte wird ein der späteren Verkleidung etwa entsprechender Zuschnitt vorgewärmt und anschließend in einer Presse unter Schmelzen des Bindemittels in die endgültige Form gebracht und zugleich in bestimmten Bereichen verdichtet. Es entsteht ein Formkörper, der aus unverdichteten oder weniger verdichteten Bereichen und stark verdichteten Bereichen besteht. Die stark verdichteten Bereiche, z.B. in Form von Rillen, Prägungen oder dgl. dienen in erster Linie der Formstabilität und dem Anbringen von Befestigungsmitteln oder dgl. oder dem Stanzen von Löchern für Durchführungen, während die unverdichteten wesentlich dickeren Bereiche der Schalldämmung dienen.

Es hat sich nun gezeigt, daß die bekannten textilen Formkörper im Motorraum häufig einer vorzeitigen Alterung unterliegen, was zu einer mangelhaften Lebensdauer dieser Formkörper führt.

Der Erfindung liegt die Aufgabe zugrunde, eine geräuschdämmende Verkleidung für den Motorraum von Kraftfahrzeugen zu finden, die eine gute geräuschdämmende Wirkung sowie eine hohe Lebensdauer besitzt.

Diese Aufgabe wird durch die in Patentanspruch 1 beschriebene geräuschdämmende Verkleidung gelöst.

Die geräuschdämmende Verkleidung besteht somit aus einem mehrlagigen Formkörper, der aus mehreren Lagen von Fasermaterial unterschiedlicher Zusammensetzung besteht. Auf der zum Motor hinweisenden Seite sind zwei Schichten 1,2 aus thermisch hochbelastbarem Material angeordnet, während auf der zur Karosserie hinweisenden Seite wie bisher Reißwolle 3 oder dgl., also eine textile Faser, zur Anwendung kommt. Die zum Motor hinweisenden thermisch hoch belastbaren Schicht 2 besteht aus einer Mineralfaserschicht, d.h. aus einer Schicht aus einem anorganischen, thermisch hoch belastbaren Fasermaterial, das zum Motor hin mit einer dünnen Schicht eines thermisch hoch belastbaren Kunststoff-Fasermaterials 1 abgedeckt ist. Als Kunststoffe kommen in Frage Polybenzimidazole, Aramide, Polyimide, Polyphenylensulfide, Polyarylsulfone usw. Bevorzugt werden insbesondere Aramid- und Polyimidfasern. Das Fasermaterial kann in Form von Gewebe, Gewirk oder Vlies vorliegen, wobei im allgemeinen aus Kostengründen die Form des Vlieses bevorzugt wird.

Das an diese Schicht 1 anschließende anorganische, thermisch hoch belastbare Fasermaterial kann z.B. aus Schlacken-, Gesteins-, Quarz-, Keramik-, Asbest- oder Glasfasern bestehen. Aufgrund der guten thermischen und akustischen Eigenschaften wird eine Schicht 2 aus Gesteinsfasern, d.h. Steinwolle, insbesondere Basaltwolle bevorzugt. Diese anorganische Faserschicht soll ein Flächengewicht von 500 bis 5000 $g/m^2$, insbesondere von 1500 bis 2000 $g/m^2$ besitzen, wobei die Dicke der Schicht innerhalb dieser Grenzen je nach den Anforderungen an die thermischen bzw. akustischen Dämmeigenschaften gewählt wird. Dabei erfordert selbstverständlich eine hohe Dämmwirkung eine dickere Schicht. Die erste zum Motor zeigende Schicht 1 aus dem thermisch hochbelastbaren Kunststoffasermaterial kann wesentlich dünner sein und ein Flächengewicht von 50 bis 300 $g/m^2$, insbesondere von 120 bis 150 $g/m^2$ besitzen. Diese erste Schicht 1 dient dazu, die wenig scheuerbeständige und gegen Kratzer empfindliche anorganische Faserschicht mit einem mechanisch widerstandsfähigen Überzug zu versehen. Anschließend an die Schicht 2 aus dem anorganischen Fasermaterial ist dann noch eine dritte Schicht 3 aus einem textilen Fasermaterial, z.B. aus Reißwolle, Zellwolle oder dgl. angeordnet. Diese dritte Schicht 3 aus dem textilen Fasermaterial soll ein Flächengewicht von 300 bis 3000 $g/m^2$, insbesondere 800 bis 1000 $g/m^2$ besitzen. Aus optischen Gründen kann diese dritte Schicht 3 karosserieseitig noch mit einer weiteren textilen Schicht 4, die bevorzugt aus Kunststoffasern, z.B. Polyestervlies, besteht abgedeckt werden. Diese Schicht 4 kann wiederum sehr dünn sein und z.B. ein Flächengewicht von 50 bis 500 $g/m^2$ besitzen. Die einzelnen Schichten, insbesondere die zweite und die dritte Schicht 2,3, können mit einem innerhalb der Fasern dispergierten Bindemittel versehen sein, das bei der Warmverformung des Rohlings für einen Zusammenhalt der Schichten führt. Die Schichten können aber auch durch zwischengelegte, wärmeaktivierbare Klebstoffolien verbunden werden.

Falls die Schichten 2 und 3 mit einem innerhalb des Fasergewirrs dispergierten wärmeaktivierbaren Bindemittel versehen sind, wird auch eine ausreichende Haftung der zum Motor hinweisenden dünnen Deckschicht erreicht. Auch die auf der textilen Faserschicht befindliche zur Karosserieseite hinweisende Deckschicht 4 kann auf diese Weise fixiert werden. Um ein Eindringen von Feuchtigkeit in die Verkleidung zu vermeiden, werden zweckmäßigerweise die Schichten in an sich bekannter Weise wasserabstoßend ausgerüstet. Gegebenenfalls kann auch eine Deckschicht 4 aus einer flüssigkeitsundurchlässigen Folie mit einer Stärke von 0,02 bis 0,1 mm vorgesehen sein. Falls motorseitig mit besonders hohen Temperaturen zu rechnen ist, z.B. in der Nähe von Auspuffkrümmern, kann die Verkleidung vorteilhaft in diesen besonders belasteten Abschnitten zusätzlich noch mit einer Aluminiumfolie kaschiert werden, die die Wärmestrahlung reflektiert.

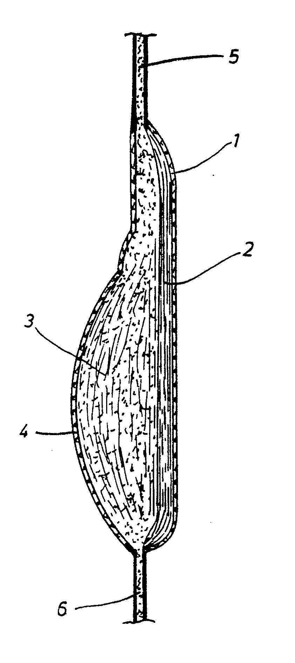

In der Abbildung wird ein Querschnitt durch eine geräuschdämmende Verkleidung gezeigt. Die Verkleidung besteht aus vier Schichten, einer ersten Abdeckschicht 1, die aus einem Aramidvlies mit einem Flächengewicht von 130 g/m² besteht, einer zweiten Schicht 2 aus einem Basaltsteinwollevlies, das ein Flächengewicht von 1500 g/m² besitzt, einer dritten Schicht 3 aus einem Reißwollevlies mit einem Flächengewicht von 800 g/m² und einer Abdeckung 4 für die Reißwolle, bestehend aus einem Polyestervlies mit einem Flächengewicht von etwa 150 g/m². Die Schicht 1 zeigt dabei zum Motor. Wie man dem in der Abbildung gezeigten Ausschnitt aus der geräuschdämmenden Verkleidung weiter entnehmen kann, weist der Formkörper durch unterschiedlichen Druck während seiner Verformung Zonen unterschiedlicher Dichte auf, wobei in den Zonen 5 und 6 das Fasermaterial praktisch porenfrei verdichtet ist. Solche Bereiche dienen entweder infolge ihrer höheren mechanischen Stabilität als Versteifungsrippen, oder sie stellen flächige Inseln in dem Formkörper dar, in die Löcher zur Durchführung von Leitungen oder dgl. oder zur Anbringung von Befestigungsmitteln gestanzt werden.

Die mit der Erfindung erzielbaren Vorteile liegen in erster Linie darin, daß die geräuschdämmende Verkleidung auf den bisherigen Einrichtungen preiswert produzierbar ist, eine außerordentlich gute geräuschdämmende Wirkung besitzt und den im Motorraum herrschenden Bedingungen ohne Schwierigkeiten auch langfristig widerstehen kann.

## Patentansprüche

1. Geräuschdämmende Verkleidung für den Motorraum von Kraftfahrzeugen, bestehend aus einem mehrlagigen Formkörper aus Fasermaterial, die unter Druck und Wärme unter Ausbildung von Zonen definiert vorgebbarer Verdichtung zu dem Formkörper verformt worden ist,
   **gekennzeichnet durch**
   eine erste, zum Motor weisende Schicht (1) aus einem thermisch hoch belastbaren Kunststoff-Fasermaterial, mit einem Flächengewicht von 50 bis 300 g/m²,
   eine zweite Schicht (2) aus einem anorganischen, thermisch hoch belastbaren Fasermaterial, mit einem Flächengewicht von 500 bis 5000 g/m², und
   eine dritte Schicht (3) aus einem textilen Fasermaterial, mit einem Flächengewicht von 300 bis 3000 g/m².

2. Geräuschdämmende Verkleidung nach Anspruch 1,
   **dadurch gekennzeichnet,**
   daß die erste Schicht (1) ein Flächengewicht von 120 bis 150 g/m², die zweite Schicht (2) ein Flächengewicht von 1500 bis 2000 g/m² und die dritte Schicht (3) ein Flächengewicht von 800 bis 1000 g/m² besitzt.

3. Geräuschdämmende Verkleidung nach Anspruch 1 oder 2,
   **dadurch gekennzeichnet,**
   daß die erste Schicht (1) aus einem Aramid-Gewebe, -Gewirk oder -Vlies, die zweite Schicht (2) aus Steinwolle, insbesondere Basaltsteinwolle und die dritte Schicht (3) aus Zell- oder Reißwolle besteht.

4. Geräuschdämmende Verkleidung nach den Ansprüchen 1 bis 3,
   **dadurch gekennzeichnet,**
   daß die dritte Schicht (3) mit einer vierten, aus Kunststoffasern bestehenden Schicht (4) mit einem Flächengewicht von 120 bis 150 g/m² abgedeckt ist.

5. Geräuschdämmende Verkleidung nach den Ansprüchen 1 bis 4,
   **dadurch gekennzeichnet,**
   daß der Formkörper ein- oder beidseitig mit einer flüssigkeitsdichten undurchlässigen Folie kaschiert ist.

6. Geräuschdämmende Verkleidung nach den Ansprüchen 1 bis 5,
   **dadurch gekennzeichnet,**
   daß der Formkörper auf der zum Motor weisenden Seite teilweise mit einer Aluminiumfolie kaschiert ist.

## Claims

1. A sound-damping lining of the engine space of motor vehicles consisting in a multilayer formed element of fibre material which has been shaped by the application of pressure and heat to constitute the formed element with the creation of areas of defined presettable compression, characterized in a first layer (1) facing the engine in a thermally highly loadable plastic fibre material, with a surface weight of 50 to 300 g/m2, a scond layer (2) in an inorganic thermally highly loadable fibre material, with a surface weight of 500 to 5000 g/m² and a third layer in a textile fibre material with a surface weight of 300 to 3000 g/m².

2. A sound-damping lining according to claim 1, characterized in that the first layer (1) has a surface weight of 120 to 150 g/m², the second layer (2) a surface weight of 1500 to 2000 g/m² and the third layer (3) a surface weight of 800 to 1000 g/m².

3. A sound-damping lining according to either claim 1 or 2, characterized in that the first layer (1) consists in an aramide woven, knitted or felt material, the second layer (2) in rock wool, particularly basalt rock wool, and the third layer (3) in viscose staple fibre or reprocessed wool.

4. A sound-damping lining according to claims 1 to 3, characterized in that the third layer (3) is covered with a fourth layer (4) made of plastic fibres to a surface weight of 120 to 150 g/m².

5. A sound-damping lining according to claims 1 to 4, characterized in that the formed element is covered on one or both sides with a liquid-proof impermeable foil.

6. A sound-damping lining according to claims 1 to 5, characterized in that the formed element is partly covered with an aluminium foil on the side facing the engine.

## Revendications

1. Revêtement insonorisant pour le compartiment moteur de véhicules automobiles, composé d'un élément moulé multicouche en matière fibreuse, qui a été mis à la forme de l'élément moulé sous pression et à chaud avec formation de zones d'une densité définie pouvant être choisie à l'avance, caractérisé par :
un première couche (1), dirigée vers le moteur, faite d'une matière fibreuse synthétique, à haute résistance aux contraintes thermiques, possédant un poids par unité de surface de 50 à 100 g/m²,
une deuxième couche (2), faite d'une matière fibreuse inorganique, à haute résistance aux contraintes thermiques possédant un poids par unité de surface de 500 à 5 000 g/m², et

une troisième couche (3) faite d'une matière fibreuse textile possédant un poids par unité de surface de 300 à 3 000 g/m².

2. Revêtement insonorisant selon la revendication 1, caractérisé en ce que la première couche (1) possède un poids par unité de surface de 120 à 150 g/m², la deuxième couche (2) un poids par unité de surface de 1 500 à 2 000 g/m² et la troisième couche (3) un poids par unité de surface de 800 à 1 000 g/m².

3. Revêtement insonorisant selon la revendication 1 ou 2, caractérisé en ce que la première couche (1) est composée d'un tissu tissé, tissu tricoté ou tissu non tissé d'aramide, la deuxième couche (2) de laine de roche, notamment de laine de basalte, et la troisième couche (3) de laine de cellulose ou de laine renaissance.

4. Revêtement insonorisant selon les revendications 1 à 3, caractérisé en ce que la troisième couche (3) est recouverte d'une quatrième couche (4) composée de fibres synthétiques et possédant un poids par unité de surface de 120 à 150 g/m².

5. Revêtement insonorisant selon les revendications 1 à 4, caractérisé en ce que l'élément moulé est doublé, sur une face ou sur les deux faces, d'une pellicule imperméable, étanche aux liquides.

6. Revêtement insonorisant selon les revendications 1 à 5, caractérisé en ce que l'élément moulé est partiellement doublé d'une pellicule d'aluminium sur la face dirigée vers le moteur.